(19) Europäisches Patentamt
European Patent Office
Office européen des brevets

(11) EP 1 187 506 B1

(12) **EUROPEAN PATENT SPECIFICATION**

(45) Date of publication and mention
of the grant of the patent:
**24.11.2004 Bulletin 2004/48**

(51) Int Cl.7: **H04Q 7/38**, H04B 7/06

(21) Application number: **01302466.6**

(22) Date of filing: **19.03.2001**

(54) **Communication system having a flexible transmit configuration**

Kommunikationsystem mit flexibler Sendekonfiguration

Système de communication ayant une configuration de transmission flexible

(84) Designated Contracting States:
**DE FR GB IT**

(30) Priority: **12.09.2000 US 660095**

(43) Date of publication of application:
**13.03.2002 Bulletin 2002/11**

(73) Proprietor: **LUCENT TECHNOLOGIES INC.**
**Murray Hill, New Jersey 07974-0636 (US)**

(72) Inventors:
• **Kogiantis, Achilles George**
**Madison, New Jersey 07940 (US)**
• **Sunay, Mehmet Oguz**
**Koc Universit.Lojmanlari 16/2**
**Istanbul (TR)**
• **Viswanathan, Harish**
**Basking Ridge, New Jersey 07920 (US)**

(74) Representative:
**Buckley, Christopher Simon Thirsk et al**
**Lucent Technologies (UK) Ltd,**
**5 Mornington Road**
**Woodford Green, Essex IG8 0TU (GB)**

(56) References cited:
EP-A- 0 966 125        WO-A-99/14871
WO-A-99/39454        US-A- 5 666 649

• **SAYEED Z: "THROUGHPUT ANALYSIS AND DESIGN OF FIXED AND ADAPTIVE ARQ/DIVERSITY SYSTEMS FOR SLOW FADING CHANNELS" IEEE GLOBECOM 1998. GLOBECOM '98. THE BRIDGE TO GLOBAL INTEGRATION. SYDNEY, NOV. 8 - 12, 1998, IEEE GLOBAL TELECOMMUNICATIONS CONFERENCE, NEW YORK, NY: IEEE, US, vol. 6, 1998, pages 3686-3691, XP000805313 ISBN: 0-7803-4985-7**

## Description

## Background of the Invention

### 1. Field of the Invention

The present invention relates to communications; more specifically, wireless communications.

### 2. Description of the Related Art

Prior communication systems have been designed around one type of transmit configuration. In older systems, a single antenna is used for transmitting. In newer systems, one of several other types of transmit configurations have been used but they did not provide flexibility to address channel conditions such as the degree of mobility associated with a mobile station.

EP-A-0 966 125 discloses a duplexing scheme with a first band of frequencies and a second band of frequencies. The method comprises the steps of: determining an amount of available capacity on the first band of frequencies, transmitting, on the first band of frequencies, a variable amount of feedback data corresponding to the amount of available capacity on the first band of frequencies, the feedback data comprising data for improving the quality of corrimunications on the second band of frequencies, and optimizing transmissions on the second band of frequencies using, when available, the feedback data.

US-A-5 666 649 discloses system performance in a mobile communications system is improved by detecting whether a mobile unit has a particular capability, and adjusting operation of the base station to improve system performance in response to detection that the mobile unit has the particular capability. The capability may be radio reception with lower signal to interference requirements. In this case, system performance may be improved by adjusting base station transmitter power to a reduced power range in response to detection that the mobile unit has the particular capability, thereby creating less interference to mobiles that require a higher signal to interference requirement, and increasing system capacity. Detection may include receiving a signal from the mobile unit, wherein the signal is encoded to indicate whether the mobile station has the particular capability. Alternatively, the signal may be a signal that is encoded to identify from which one of a plurality of mobile units the identifying signal was received. In this instance, the base station uses the identifying signal to retrieve a capability-indicating code from a database, which may be located in the subscriber's home exchange. In another aspect of the disclosed system, a lower of two billing rates is selected for billing a mobile unit in response to detection that the mobile unit has the particular capability. This passes along system savings to the subscriber, and creates an incentive for the subscriber to purchase the usually more expensive mobile unit that has the particular capability.

WO-A-99 14871 discloses a simple block coding arrangement created with symbols transmitted over a plurality of transmit channels, in connection with coding that is comprised only of simple arithmetic operations, such as negation and conjugation. The diversity created by the transmitter utilizes space diversity and either time or frequency diversity. Space diversity is effected by redundantly transmitting over different frequencies using a plurality of antennas. Illustratively, using two transmit antennas and a single receive antenna, one of the disclosed embodiments provides the same diversity gain as the maximal-ratio receiver combining scheme with one transmit antenna and two receive antennas.

## Summary of the Invention

A method according to the invention is as set out in claim 1. Preferred forms are set out in the dependent claims.

The present invention provides a communication system with a transmit configuration that may be reconfigured based on mobile station associated conditions such as the capability of the mobile receiver, carrier to interference or signal to noise ratios, and the degree of mobility associated with the mobile station. As a result, the transmit configuration is optimized for the conditions associated with a particular mobile receiver. In one embodiment, the transmit configuration may be selected to operate in configurations such as a single transmit antenna configuration, a space time spreading configuration, a selective transmit diversity configuration, and a multi-output and multi-input configuration.

## Brief Description of the Drawings

FIG. 1 illustrates a single transmit antenna configuration;
FIG. 2 illustrates a selective transmit diversity configuration;
FIG. 3 illustrates a space time spreading configuration; and
FIG. 4 illustrates a multi-output and multi-input configuration.

## Detailed Description

When a mobile station initially makes contact with a base station requesting a communication channel, it transmits information such as its electronic serial number (ESN), and mobile associated channel conditions such as carrier to interference ratio $(\frac{C}{I})$, signal to noise ratio $(\frac{S}{N})$, the mobile station's degree of mobility (whether the mobile is standing still, moving slowly or moving at a relatively high speed) and the transmit configurations supported by the mobile. Additionally, the base station transmits its capabilities to mobile stations on a channel such as a paging channel or synchronization channel where is indicates the types of transmit configurations that are available. In one embodiment, based on the information provided by the mobile station and the capabilities of the base station, the base station provides one of four different transmit configurations for communications with the mobile station. The selected transmit configuration is communicated to the mobile station using a control channel such as a paging channel or synchronization channel.

In one embodiment, the four transmit configurations are a single transmit antenna configuration, a selective transmit diversity configuration, a space time spreading configuration and a multi-input/multi-output configuration. The use of these four configurations is provided for instructional purposes. Different numbers and different types of configurations may be used.

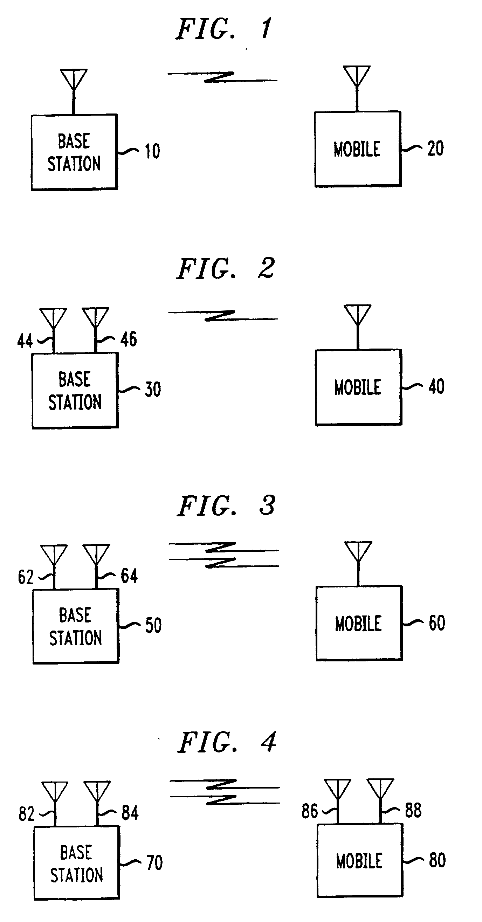

FIG. 1 illustrates a single transmit antenna configuration. Base station 10 communicates with mobile 20 using a single antenna at both the base station and mobile station. This configuration may be the default configuration and is typically assigned when the mobile has a high degree of mobility. High degrees of mobility correspond to times such as when the mobile station is in a motor vehicle or a train.

FIG. 2 illustrates a selective transmit configuration. In this configuration, base station 30 communicates with mobile station 40 using one of multiple transmit antennas and one antenna at the mobile station. Communications are tested using each of antennas 44 and 46, and then the mobile reports to the base station which of the two antennas provided superior communications. Superior communications may be determined using factors such as carrier to interference ratios, signal to noise ratios or error rates. This configuration is typically used when there are poor channel conditions such as low carrier to interference ratio and the mobile has a low level of mobility. Low mobility corresponds to situations such as the mobile being stationary or being carried by a user as he or she walks.

FIG. 3 illustrates a space time spreading configuration. Base station 50 communicates with mobile station 60 using at least two transmit antennas at the base station simultaneously and one receive antenna at the mobile station. In this configuration each of the transmit antennas uses a different Walsh code for the data that is transmitted through the antenna. In the case of two antennas as illustrated in the figure, antennas 62 and 64 carry data encoded with different orthogonal codes such as Walsh codes. This type of configuration is typically used in situations where channel conditions are good; that is, the carrier to interference ratio or signal to noise ratio is high and the mobility of the mobile station is low.

FIG. 4 illustrates a multi-input/multi-output transmit configuration. In this configuration base station 70 transmits to mobile station 80 using at least two transmit antennas and mobile station 80 receives the signals using at least two receive antennas. In this configuration data is simultaneously transmitted on antennas 82 and 84, and it is received by antennas 86 and 88. This type of configuration is typically used where there are good channel conditions such as a high carrier to interference ratio or signal to noise ratio, where the mobility of the mobile station is low, and where the mobile station has multiple receive antennas.

Other types of known configurations may be used or a subset of the above described configurations may be used based on the capabilities of the base station and mobile station associated channel conditions such as the capabilities of the mobile station, carrier to interference ratio, the signal to noise ratio and the mobile station's mobility.

**Claims**

1. A method for reconfiguring a communication system, **characterized by** the steps of:

   receiving, from a mobile station (20, 40, 60, 80), a plurality of mobile station capabilities and selecting one of a plurality of transmit configurations using at least one of the plurality of mobile station capabilities received, the plurality of mobile station capabilities including at least two capabilities from a list including a single transmit antenna configuration, a space time spreading configuration, a selective transmit diversity configuration, and a multi-input/multi-output configuration.

2. The method of claim 1 further comprising:

   receiving channel quality information and wherein,
   the selecting step includes selecting one of the plurality of transmit configurations using the channel quality information received and at least one of the plurality of mobile station capabilities received.

3. The method of claim 2, further comprising:

   receiving information on mobility of the mobile station; and wherein,
   the selecting step selects one of the plurality of transmit configurations using at least one of the plurality of mobile station capabilities, channel quality information, and the information on the mobility of the mobile station.

4. The method of claim 2, wherein the channel quality information includes information on a carrier to noise ratio of a communication channel.

**5.** The method of claim 2 wherein, the channel quality information includes information on a signal to noise ratio of a communication channel.

**6.** The method of claim 2, wherein, the channel quality information includes information on an error rate.

**7.** The method of claim 2, wherein the step of selecting comprises selecting a single antenna transmit configuration.

**8.** The method of claim 2, wherein the step of selecting comprises selecting a selection transmit diversity transmit configuration.

**9.** The method of claim 2, wherein the step of selecting comprises selecting a space time spreading transmit configuration.

**10.** The method of claim 2, wherein the step of selecting comprises selecting a multi-output and multi-input transmit configuration.

**11.** The method of claim 2, wherein the step of selecting comprises selecting a configuration that selects one of a plurality of transmit antennas

**12.** The method of claim 2, wherein the step of selecting comprises selecting a configuration that transmits using a plurality of transmit antennas.

**13.** The method of claim 12, wherein the step of selecting comprises selecting a configuration that transmits using a plurality of transmit antennas, where each antenna uses a different orthogonal code.

**14.** The method of claim 13, wherein the step of selecting comprises selecting a configuration that transmits using a plurality of transmit antennas, where each antenna uses a different Walsh code.

**15.** The method of claim 1, wherein, the single transmit antenna configuration involves receiving, using a first single antenna, a signal from one antenna of the mobile station used to transmit the signal; the selective transmit diversity configuration involves selecting one of a plurality of antennas to communicate with the one antenna of the mobile station; the space time spreading configuration involves using a plurality of antennas to communicate with the one antenna of the mobile station; the multi-input/multi-output configuration involves using a plurality of antennas to communicate with a plurality of antennas of the mobile station.

**Patentansprüche**

**1.** Verfahren zum Umkonfigurieren eines Kommunikationssystems, **gekennzeichnet durch** folgende Schritte:

Empfangen einer Mehrzahl von Mobilstationsfähigkeiten von einer Mobilstation (20, 40, 60, 80) und

Auswählen einer von einer Mehrzahl von Sendekonfigurationen unter Verwendung von mindestens einer der empfangenen Mehrzahl von Mobilstationsfähigkeiten, wobei die Mehrzahl von Mobilstationsfähigkeiten mindestens zwei Fähigkeiten aus einer Liste mit einer einzelnen Sendeantennenkonfiguration, einer Raumzeit-Spreizkonfiguration, einer selektiven Sendediversitykonfiguration und einer Mehreingangs-/Mehrausgangs-Konfiguration einschließt.

**2.** Verfahren nach Anspruch 1, weiterhin mit folgendem:

Empfangen von Kanalgüteinformationen und wobei

der Schritt des Auswählens das Auswählen einer der Mehrzahl von Sendekonfigurationen unter Verwendung der empfangenen Kanalgüteinformationen und mindestens einer der Mehrzahl von empfangenen Mobilstationsfähigkeiten einschließt.

**3.** Verfahren nach Anspruch 2, weiterhin mit folgendem:

Empfangen von Informationen über die Beweglichkeit der Mobilstation, und wobei

der Schritt des Auswählens eine der Mehrzahl von Sendekonfigurationen unter Verwendung von mindestens einer der Mehrzahl von Mobilstationsfähigkeiten, Kanalgüteinformationen und der Informationen über die Beweglichkeit der Mobilstation auswählt.

**4.** Verfahren nach Anspruch 2, wobei die Kanalgüteinformationen Informationen über ein Träger-Rauschverhältnis eines Kommunikationskanals einschließen.

**5.** Verfahren nach Anspruch 2, wobei die Kanalgüteinformationen Informationen über ein Signal-Rauschverhältnis eines Kommunikationskanals einschließen.

**6.** Verfahren nach Anspruch 2, wobei die Kanalgüteinformationen Informationen über eine Fehlerrate einschließen.

**7.** Verfahren nach Anspruch 2, wobei der Schritt des Auswählens das Auswählen einer einzelnen Antennensendekonfiguration umfaßt.

**8.** Verfahren nach Anspruch 2, wobei der Schritt des Auswählens das Auswählen einer Auswahl-Sendediversity-Sendekonfiguration umfaßt.

**9.** Verfahren nach Anspruch 2, wobei der Schritt des Auswählens das Auswählen einer Raumzeit-Spreiz-Sendekonfiguration umfaßt.

**10.** Verfahren nach Anspruch 2, wobei der Schritt des Auswählens das Auswählen einer Mehrausgangs- und Mehreingangs-Sendekonfiguration umfaßt.

**11.** Verfahren nach Anspruch 2, wobei der Schritt des Auswählens das Auswählen einer Konfiguration umfaßt, die eine von einer Mehrzahl von Sendeantennen auswählt.

**12.** Verfahren nach Anspruch 2, wobei der Schritt des Auswählens das Auswählen einer Konfiguration umfaßt, die unter Verwendung einer Mehrzahl von Sendeantennen sendet.

**13.** Verfahren nach Anspruch 12, wobei der Schritt des Auswählens das Auswählen einer Konfiguration umfaßt, die unter Verwendung einer Mehrzahl von Sendeantennen sendet, wobei jede Antenne einen anderen Orthogonalcode verwendet.

**14.** Verfahren nach Anspruch 13, wobei der Schritt des Auswählens das Auswählen einer Konfiguration umfaßt, die unter Verwendung einer Mehrzahl von Sendeantennen sendet, wobei jede Antenne einen anderen Walsh-Code verwendet.

**15.** Verfahren nach Anspruch 1, wobei die einzelne Sendeantennenkonfiguration das Empfangen unter Verwendung einer ersten einzelnen Antenne eines Signals von einer zum Senden des Signals benutzten Antenne der Mobilstation bedeutet; die selektive Sendediversitykonfiguration das Auswählen einer von einer Mehrzahl von Antennen zum Kommunizieren mit der einen Antenne der Mobilstation bedeutet, die Raumzeit-Spreizkonfiguration das Verwenden einer Mehrzahl von Antennen zum Kommunizieren mit der einen Antenne der Mobilstation bedeutet; die Mehreingangs-/Mehrausgangskonfiguration die Verwendung einer Mehrzahl von Antennen zum Kommunizieren mit einer Mehrzahl von Antennen der Mobilstation bedeutet.

**Revendications**

**1.** Procédé de reconfiguration d'un système de communication, **caractérisé par** les étapes de :

réception, d'une station mobile (20, 40, 60, 80) d'une pluralité de fonctions de station mobile, et sélection d'une parmi une pluralité de configurations de transmission à l'aide d'au moins une parmi la pluralité de fonctions de station mobile reçues, la pluralité de fonctions de station mobile comportant au moins deux fonctions issues d'une liste comprenant une configuration à antenne émettrice unique, une configuration à étalement spatio-temporel, une configuration en diversité de transmission sélective et une configuration à entrées multiples/ sorties multiples.

**2.** Procédé selon la revendication 1, comprenant en outre :

la réception d'informations de qualité de canal, et dans lequel
l'étape de sélection comporte la sélection d'une parmi la pluralité de configurations de transmission à l'aide des informations de qualité de canal reçues et d'au moins une parmi la pluralité de fonctions de station mobile reçues.

**3.** Procédé selon la revendication 2, comprenant en outre :

la réception d'informations sur la mobilité de la station mobile ; et dans lequel
l'étape de sélection sélectionne une parmi la pluralité de configurations de transmission à l'aide d'au moins une parmi la pluralité de fonctions de station mobile, les informations de qualité de canal et les informations sur la mobilité de la station mobile.

**4.** Procédé selon la revendication 2, dans lequel les informations de qualité de canal comportent des informations sur le rapport porteuse/bruit d'un canal de communication.

**5.** Procédé selon la revendication 2, dans lequel les informations de qualité de canal comportent des informations sur le rapport signal/bruit d'un canal de communication.

**6.** Procédé selon la revendication 2, dans lequel les informations de qualité de canal comportent des informations sur un taux d'erreurs.

**7.** Procédé selon la revendication 2, dans lequel l'étape de sélection comprend la sélection d'une configuration à antenne émettrice unique.

8. Procédé selon la revendication 2, dans lequel l'étape de sélection comprend la sélection d'une configuration de transmission en diversité de transmission sélective.

9. Procédé selon la revendication 2, dans lequel l'étape de sélection comprend la sélection d'une configuration de transmission à étalement spatio-temporel.

10. Procédé selon la revendication 2, dans lequel l'étape de sélection comprend la sélection d'une configuration de transmission à entrées multiples/sorties multiples.

11. Procédé selon la revendication 2, dans lequel l'étape de sélection comprend la sélection d'une configuration qui sélectionne une parmi une pluralité d'antennes émettrices.

12. Procédé selon la revendication 2, dans lequel l'étape de sélection comprend la sélection d'une configuration qui transmet à l'aide d'une pluralité d'antennes émettrices.

13. Procédé selon la revendication 12, dans lequel l'étape de sélection comprend la sélection d'une configuration qui transmet à l'aide d'une pluralité d'antennes émettrices, chaque antenne utilisant un code orthogonal différent.

14. Procédé selon la revendication 13, dans lequel l'étape de sélection comprend la sélection d'une configuration qui transmet à l'aide d'une pluralité d'antennes émettrices, chaque antenne utilisant un code de Walsh différent.

15. Procédé selon la revendication 1, dans lequel la configuration à antenne émettrice unique comporte la réception, à l'aide d'une première antenne unique, d'un signal provenant d'une antenne de la station mobile utilisée pour transmettre le signal ; la configuration en diversité de transmission sélective comporte la sélection d'une parmi une pluralité d'antennes pour communiquer avec ladite antenne de la station mobile ; la configuration à étalement spatio-temporel comporte l'utilisation d'une pluralité d'antennes pour communiquer avec ladite antenne de la station mobile ; la configuration à entrées multiples/sorties multiples comporte l'utilisation d'une pluralité d'antennes pour communiquer avec une pluralité d'antennes de la station mobile.

FIG. 1

FIG. 2

FIG. 3

FIG. 4